Europäisches Patentamt

European Patent Office

Office européen des brevets

(19)

(11) Veröffentlichungsnummer : **0 086 316**
**B1**

(12) **EUROPÄISCHE PATENTSCHRIFT**

(45) Veröffentlichungstag der Patentschrift :
06.07.88

(51) Int. Cl.⁴ : **H 01 R 25/16**

(21) Anmeldenummer : 82710058.7

(22) Anmeldetag : 11.12.82

(54) Steckkontaktvorrichtung zur Herstellung einer elektrischen Verbindung zwischen zwei Schienen.

(30) Priorität : 23.12.81 SE 8107767

(43) Veröffentlichungstag der Anmeldung :
24.08.83 Patentblatt 83/34

(45) Bekanntmachung des Hinweises auf die Patenterteilung : 06.07.88 Patentblatt 88/27

(84) Benannte Vertragsstaaten :
BE DE GB NL

(56) Entgegenhaltungen :
FR-A- 1 148 312
FR-A- 2 394 194

(73) Patentinhaber : ASEA AB
S-721 83 Västeras (SE)

(72) Erfinder : Nygard, Martin
Spinnfiskargatan 42
S-723 48 Västeras (SE)

(74) Vertreter : Boecker, Joachim, Dr.-Ing.
Rathenauplatz 2-8
D-6000 Frankfurt a.M. 1 (DE)

EP 0 086 316 B1

## Beschreibung

Die Erfindung betrifft eine Steckkontaktvorrichtung gemäß dem Oberbegriff des Anspruches 1.

Eine solche Steckkontaktvorrichtung ist bekannt aus der US-A-4 227 596.

Die Kontaktvorrichtung ist vor allem zum Anschluß solcher Geräte und Gerätegruppen in Niederspannungsschaltanlagen geeignet, die zur Herstellung bzw. Aufhebung des elektrischen Anschlusses einschiebbar bzw. herausziehbar ausgebildet sind.

Solche herausziehbaren Geräte müssen mit einer Steckkontaktvorrichtung (englisch : plug-in-Kontaktvorrichtung) zum Anschluß der Hauptstrompfade an die Sammelschienen der Schaltanlage versehen sein. Bei einem vollkommen berührungsgeschützten Sammelschienensystem sollen diese Steckkontaktvorrichtungen, um ein einfaches System zu erhalten, schmal sein, um durch Schlitze in einem vor den Sammelschienen angeordneten Isolierschirm hindurchgeführt werden zu können. Die Steckkontaktvorrichtungen sollen sehr zuverlässig sein, einen niedrigen Übergangswiderstand haben, eine nachführende Kontaktanlage haben und kurzschlußsicher sein.

Bei der aus der US-A-4 227 596 bekannten Steckkontaktvorrichtung für herausziehbare Geräte sind zwei Kontaktteile vorhanden, die zwei elektrisch parallelgeschaltete Strompfade bilden zwischen einer Sammelschiene mit zwei einander gegenüberliegenden parallelen Kontaktflächen einerseits und einem Kontaktmesser an dem herausziehbaren Gerät andererseits. Die Strompfade kreuzen sich an dem einen Endabschnitt der Kontaktvorrichtung und verlaufen parallel in einem relativ langen mittleren Abschnitt der Kontaktvorrichtung, wodurch man eine elektrodynamische Kontaktdruckverstärkung erhält. Die Kontaktvorrichtung ist von einem isolierenden Gehäuse umgeben, das beispielsweise in einem Schaltschrank fest montiert ist, wobei sich das eine Ende der Kontaktvorrichtung in ständiger Verbindung mit der Sammelschiene befindet. Eine solche Ausführung hat u.a. den Nachteil, daß die Kontaktvorrichtung für Kontrollzwecke schwer zugänglich ist, da sie im Schaltschrank eingeschlossen und dort fest montiert ist. Da es in der Regel die beweglichen Teile einer Vorrichtung sind, die der Wartung bedürfen, ist man bestrebt, so wenig wie möglich bewegliche Teile fest im Schaltschrank zu montieren. Außerdem wird die Kontaktvorrichtung durch das isolierende Gehäuse verteuert.

Der Erfindung liegt die Aufgabe zugrunde, eine Steckkontaktvorrichtung der eingangs genannten Art zu entwickeln, die im Vergleich zu den bekannten Steckvorrichtungen einfacher, zuverlässiger, billiger und leichter zu kontrollieren und zu warten ist.

Zur Lösung dieser Aufgabe wird eine Steckkontaktvorrichtung nach dem Oberbegriff des Anspruches 1 und 2 vorgeschlagen, die erfindungsgemäß die im kennzeichnenden Teil des Anspruches 1 bzw. 2 genannten Merkmale hat.

Vorteilhafte Weiterbildungen der Erfindung sind in den Unteransprüchen genannt.

Eine Kontaktvorrichtung gemäß der Erfindung läßt sich ohne Hilfsmittel leicht an dem herausziehbaren Gerät anbringen, und da die Kontaktvorrichtung dem Gerät folgt, braucht sie nicht von einem isolierenden Gehäuse umgeben zu sein. Sie kann leicht kontrolliert werden, ohne daß die Schaltanlge spannungsfrei geschaltet zu werden braucht. Bei der Kontaktvorrichtung gemäß der Erfindung sind beide Endabschnitte so ausgebildet, daß sich die beiden Strompfade in den Endabschnitten kreuzen. Die langen Mittelteile der beiden Kontaktteile verlaufen verhältnismäßig nahe beieinander.

Um eine gute Führung und ein gutes Anliegen der Kontakte zu erhalten, sind die Kontaktteile so ausgebildet, daß jedes Kontaktteil in je drei Punkten an den beiden Kontaktschienen anliegt, die es miteinander verbindet. Dadurch wird die Kontakvorrichtung gegenüber einer Drehung verhältnismäßig unempfindlich.

Anhand der in den Figuren gezeigten Ausführungsbeispiele soll die Erfindung näher erläutert werden. Es zeigen

Fig. 1a eine erste Ausführungsform einer Kontaktvorrichtung gemäß der Erfindung in Seitenansicht,

Fig. 1b die Kontaktvorrichtung gemäß Fig. 1a in Endansicht,

Fig. 1c die Kontaktvorrichtung nach Fig. 1 von oben,

Fig. 2a und 2b ein Kontaktteil der Kontaktvorrichtung nach Fig. 1a-1c in Seitenansicht und Draufsicht,

Fig. 3 eine Kontaktvorrichtung nach Fig. 1a-1c in ihrer Betriebsstellung zwischen einer Sammelschiene und einer Geräteschiene,

Fig. 4 in Seitenansicht den Endabschnitt einer abgewandelten Ausführung einer Kontaktvorrichtung nach Fig. 1a-1c, der in einer Geräteschiene befestigt ist,

Fig. 5 eine Kontaktvorrichtung nach Fig. 1a-1c, die als Trennschalter zwischen einer Sammelschiene und einer fest montierten Kontaktkammer verwendet wird.

Fig. 6a eine zweite Ausführungsform einer Kontaktvorrichtung gemäß der Erfindung in Seitenansicht,

Fig. 6b die Ausführungsform nach Fig. 6a längs eines Schnittes A-A in Fig. 6a,

Fig. 7a, 7b und 7c eines der Kontaktteile der Kontaktvorrichtung nach Fig. 6a und 6b in Seitenansicht, Draufsicht und im Schnitt längs der Linie B-B,

Fig. 8 die Kontaktvorrichtung nach Fig. 6a und 6b in ihrer Betriebsstellung zwischen einer Sammelschiene und einer Geräteschiene,

Fig. 9 in Seitenansicht den Endabschnitt einer abgewandelten Ausführungsform der Kontaktvorrichtung nach Fig. 6a und 6b, der in einer Geräteschiene befestigt ist.

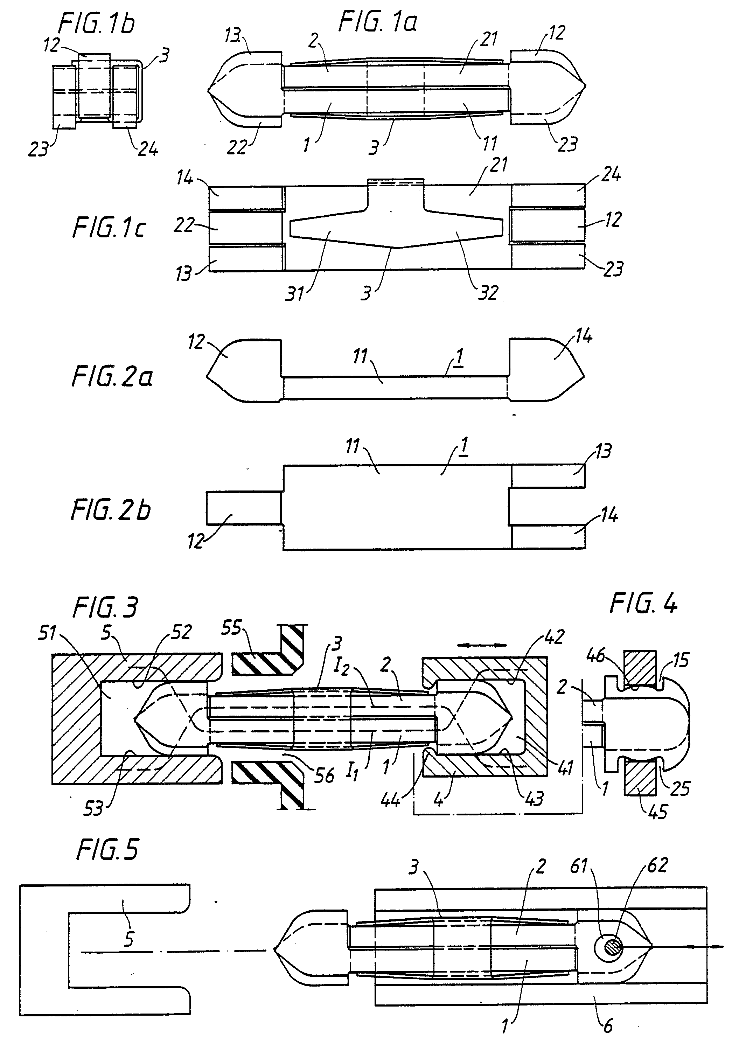

Die in den Figuren 1a-1c gezeigte Steckkontaktvorrichtung besteht aus zwei länglichen Kontaktteilen 1 und 2 sowie aus einer umgreifenden Feder 3. Der Aufbau der beiden Kontaktteile, von denen das Kontaktteil 1 separat in den Figuren 2a und 2b gezeigt ist, ist identisch. Jedes Kontaktteil 1, 2 besteht aus einem ebenen, rechteckigen Mittelteil 11 bzw. 21 und zwei aus der Ebene des Mittelteils in derselben Richtung herausragenden, als Kontaktzungen ausgebildeten Endabschnitten. Der eine Endabschnitt besteht aus einer Mittelkontaktzunge 12 bzw. 22, die in der Mitte der schmalen Seite des Mittelteils 11 liegt. Der andere Endabschnitt besteht aus zwei Seitenkontaktzungen 13, 14 bzw. 23, 24, die an den Seiten der schmalen Seite des Mittelteils 11 bzw. 21 angeordnet sind. Der Abstand zwischen den Seitenkontaktzungen ist größer als die Dicke der Mittelkontaktzungen.

Die Kontaktteile werden zweckmäßig durch Abschneiden von einer Profilstange aus Kupfer oder einem anderen geeigneten Kontaktmaterial hergestellt, wobei durch anschließendes Einfräsen der Enden die Kontaktzungen gebildet werden. Es ist auch möglich, die Kontaktteile durch Pressen unmittelbar in ihrer endgültigen Form herzustellen oder sie durch Sinterung pulverförmigen Materials herzustellen.

Wie die Figuren 1a-1c zeigen, sind die beiden Kontaktteile 1 und 2 mit entgegengesetzt gerichteter Längsorientierung aufeinandergelegt, so daß die Mittelkontaktzunge 12 des Kontaktteils 1 zwischen den Seitenkontaktzungen 23, 24 des Kontaktteils 2 liegt, und die Mittelkontaktzunge 22 des Kontaktteils 2 zwischen den Seitenkontaktzungen 13, 14 des Kontaktteils 1 liegt.

Die Feder 3 ist eine im wesentlichen U-förmig gebogene Blattfeder, welche die Kontaktteile umgreift, wobei die Schenkel der Feder mit Federarmen 31, 32 (Fig. 1c) versehen sind, die sich in entgegengesetzten Richtungen in Längsrichtung der Kontaktteile erstrecken. Hierdurch wird erreicht, daß die Anlagepunkte der Feder an den Kontaktteilen nahe bei den Kontaktzungen liegen, so daß man an beiden Enden der Kontaktvorrichtung eine wirksame Federung erhält. Zur Fixierung der Feder kann man die nach außen gerichteten Flächen der Kontaktteile 1, 2 mit Prägungen oder Aussparungen versehen, in welche die Enden der Federarme 31, 32 eingreifen.

Figur 3 zeigt eine Kontaktvorrichtung der in den Figuren 1a-1c gezeigten Ausführung in eingesetzter Stellung. Die Kontaktvorrichtung ist in eine Längsnut 41 einer Geräteschiene 4 eingesetzt, die zu einem herausziehbaren Gerät oder einer herausziehbaren Gerätegruppe gehört. Die Geräteschiene ist mit Sperrkanten 44 versehen, die so angeordnet sind, daß die Kontaktvorrichtung in die richtige Lage gedrückt werden kann, wonach die Sperrkanten die Kontaktvorrichtung in der Schiene festhalten. Die beiden gegenüberliegenden Nutwände 42, 43 bilden Kontaktflächen, an welchen die Kontaktzungen des einen Endabschnittes der Kontaktvorrichtung unter Druck durch die Feder 3 anliegen. Der andere Endabschnitt der Kontaktvorrichtung liegt unter Federdruck an die beiden einander gegenüberliegenden Nutwände 52 und 53 einer Nut 51 an, die zur Sammelschiene 5 gehört und in Richtung zur Schiene 4 ihre Öffnung hat. Statt einer solchen Schiene mit Nut kann eine aus zwei parallelen Schienen bestehende Sammelschiene verwendet werden. Vor der Schiene 5 ist als Berührungsschutz ein mit einen Schlitz 56 versehener Isolierschirm 55 angeordnet. Durch die beiden Kontaktteile der Kontaktvorrichtung werden zwei elek-trisch parallelgeschaltete Strompfade $I_1$ und $I_2$ zwischen den beiden Schienen 5 und 4 hergestellt. Diese Strompfade kreuzen sich an den beiden Endabschnitten der Kontaktvorrichtung, während sie auf einer verhältnismäßig langen Strecke zwischen den Kreuzungsstellen im wesentlichen parallel verlaufen und verhältnismäßig dicht beieinanderliegen. Zwischen den parallelen Strompfade tritt bei einem Kurzschlußstrom eine starke Anziehungskraft auf, wodurch der Kontaktdruck verstärkt wird. Die Kontaktvorrichtung ist daher kurzschlußsicher.

Ein wesentlicher Vorteil der in Fig. 1a-1c gezeig-ten Kontaktvorrichtung besteht darin, daß jedes Kontaktteil 1, 2 in drei Punkten an den Kontaktflächen der Schienen 4, 5 anliegt (Dreipunktanlage). Dadurch erzielt man eine gute Führung der Kontaktteile im Verhältnis zueinander sowie eine gute Anlage der Kontakte in definierten Kontaktpunkten, was u. a. dazu beiträgt, daß der Übergangswiderstand klein ist. Dadurch, daß die Kontaktzungen massiv ausgebildet sind, und ihre Abmessungen so bemessen sind, daß sie nur etwas schmaler als die Nut 51 der Sammelschiene 5 sind, erhält man außerdem eine Stützwirkung an der Sammelschiene, die z. B. während eines Kurzschlusses sehr vorteilhaft ist. Bei einem Kurzschluß versuchen die Kurzschlußkräfte die Nutenwände der Sammelschiene (bzw. die beiden Schienen bei Verwendung einer aus zwei parallelen Schienen bestehenden Sammelschiene) gegeneinanderzudrücken, was bei Verwendung einer anderen Kontaktvorrichtung zu einer bleibenden Verformung der Kontaktvorrichtung führen könnte.

Figur 4 zeigt, wie der eine Endabschnitt der Kontaktvorrichtung so modifiziert werden kann, daß die Kontaktvorrichtung in einer Geräteschiene 45 festgesetzt werden kann, die mit einem rechteckigen Loch 46 versehen ist, dessen Ab-messungen dem Querschnittsmaß der Kontakt-vorrichtung angepaßt sind. Bei dieser Ausführung hat man in die Kontaktzunge 12 des Kontaktteils 1 sowie in die Kontaktzungen 23 und 24 Quernuten 15 bzw. 25 auf solche Weise eingefräst, daß die Kontaktvorrichtung in das Loch 26 einrastet und darin festgehalten werden kann.

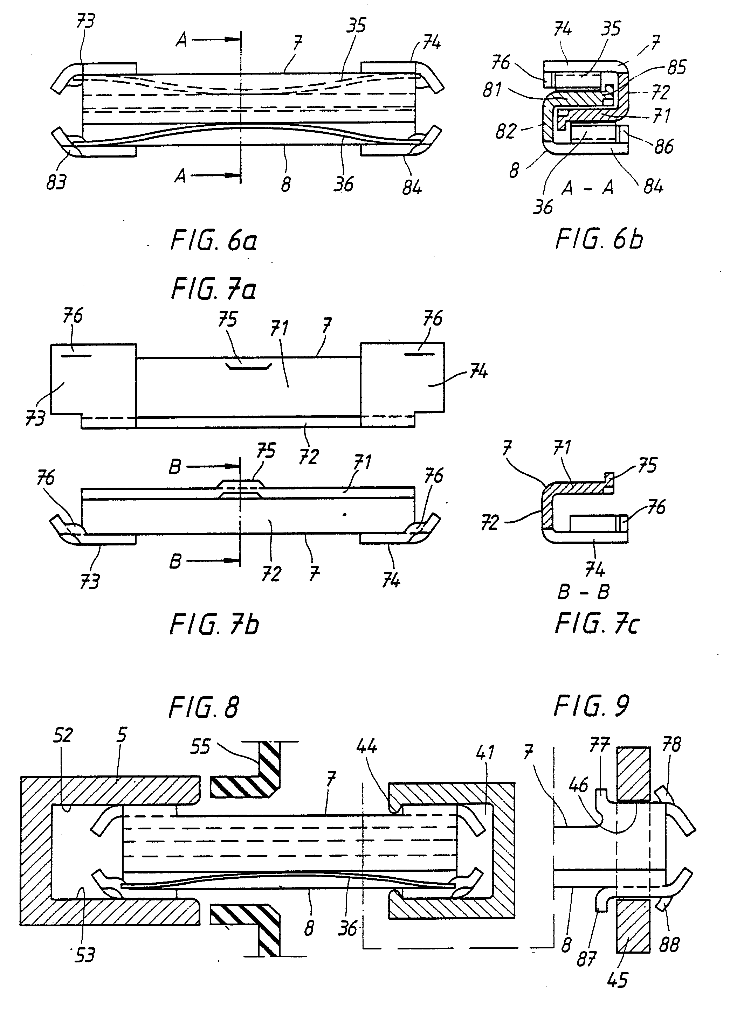

Figur 5 zeigt, wie man mit einer Kontaktvorrichtung nach der Erfindung die Trennung zwischen einer Sammelschiene 5 und einer Kontaktkammer 6 in einer Schaltanlage vornehmen kann. In diesem Fall sind die Kontaktzungen an dem einen Ende der Kontaktvorrichtung mit einem durchgehenden Loch 61 versehen, in dem ein Kontaktschieber 62 befestigt ist, dessen Durchmesser bzw. Querschnitt merklich kleiner als der des Loches 61 ist. Durch ihren speziellen Aufbau ist für die Kontaktvorrichtung genügend Platz in dem schmalen Raum zwischen den kontaktgebenden Flächen der Kontaktkammer 6 vorhanden.

Die Figuren 6a und 6b zeigen eine andere Ausführungsform einer Kontaktvorrichtung nach der Erfindung. Diese Kontaktvorrichtung besteht aus gestanzten und gebogenen Blechen, wodurch ihre Herstellungskosten verhältnismäßig gering sind. Die Kontaktfinger dieser Kontaktvorrichtung sind nicht zu einer Kontaktanlage nach dem Dreipunktprinzip ausgebildet, und die bei der oben beschriebenen Ausführungsform erläuterte Stützwirkung ist nicht vorhanden. Diese einfache Ausführungsform der Kontaktvorrichtung kann jedoch zur vollen Zufriedenheit in vielen Anwendungsfällen eingesetzt werden, bei denen keine hohen Ansprüche gestellt werden.

Die in den Figuren 6a und 6b gezeigte Kontaktvorrichtung besteht aus zwei Kontaktteilen 7 und 8 sowie zwei gebogenen Blattfedern 35 und 36. Die Kontaktteile liegen in Eingriff miteinander und sind mit Hilfe der Blattfedern, die außerdem den erforderlichen Kontaktdruck bewirken, miteinander verbunden. Die beiden Kontaktteile, von denen das Kontaktteil 7 separat in Fig. 7a-7c gezeigt ist, sind in ihrem Aufbau genau gleich. Zu jedem Kontaktteil 7 und 8 gehört ein ebenes rechteckiges Grundteil 71 bzw. 81 mit einer im rechten Winkel zum Grundteil in Längsrichtung verlaufenden Versteifungskante 72 bzw. 82.

Jedes Kontaktteil hat zwei Kontaktzungen 73, 74 bzw. 83, 84, die an den Enden des Kontaktteils angebracht sind. Die Kontaktzungen sind im rechten Winkel zur Versteifungskante abgebogen, so daß die Kontaktzungen im wesentlichen parallel zur Ebene des Grundteils liegen.

In der Mitte der freien Längskante des Grundteils sowie an der Kante der Kontaktzungen sind Erhöhungen 75, 85 bzw. 76, 86 zur Fixierung der Blattfedern 35, 36 in das Blech gepreßt. Durch die gezeigte Ausführung erreicht man in einfacher Weise, daß die einzelnen zu der Kontaktvorrichtung gehörenden Teile miteinander verbunden werden.

Figur 8 zeigt eine Kontaktvorrichtung der in den Figuren 6a und 6b gezeigten Ausführungsform, die in einer mit einer Längsnut 41 und Sperrkanten 44 versehenen Geräteschiene 4 eines herausziehbaren Gerätes fixiert ist. Das Gerät mit der an ihm vorhandenen Kontaktvorrichtung steht in Kontakt mit einer in der Schaltanlage fest montierten Sammelschiene 5, die einander gegenüberliegende Kontaktflächen 52, 53 hat, zwischen denen die Kontaktvorrichtung eingeschoben ist.

Figur 9 zeigt eine modifizierte Ausführungsform des einen Endabschnittes der Kontaktvorrichtung nach den Figuren 6a und 6b. Bei dieser Ausführungsform sind in die Kontaktzungen 74, 84 der Kontaktteile 7, 8 Sperrstreifen 77, 78 bzw. 87, 88 gepreßt, so daß die Kontaktvorrichtung in einem rechteckigen Loch in einer Geräteschiene 45 einrasten und darin festgehalten werden kann.

Beispielsweise können auch die Kontaktteile der in den Figuren 1a-1c dargestellten Kontaktvorrichtung durch Stanzen und Biegen von Blech hergestellt werden. Jedes Kontaktteil besteht dabei aus einem ebenen, rechteckigen Mittelteil und senkrecht zur Ebene des Mittelteils liegende, hochgebogene Kontaktzungen. Die den einen Endabschnitt bildende Mittelkontaktzunge wird dabei aus zwei aneinandergepreßten Blechstreifen gebildet.

Gemäß einer anderen denkbaren Ausführungsform werden die Kontaktteile dadurch hergestellt, daß in ein längliches, im wesentlichen rechteckiges Blechstück ein längliches, im wesentlichen rechteckiges Loch gestanzt wird und danach das Kontaktteil durch Biegen so geformt wird, daß sein Mittelteil aus zwei langgestreckten, in Abstand voneinander und in verschiedenen Ebenen nebeneinander liegenden Armen besteht, während seine Endabschnitte aus im wesentlichen U-förmigen Kontaktbügeln bestehen, welche die Enden der Arme verbinden. Der Abstand zwischen den Außenflächen der Bügelschenkel des Kontaktbügels an dem einen Endabschnitt wird kleiner gemacht als der Abstand zwischen den Innenflächen des Kontaktbügels an dem anderen Endabschnitt, so daß die Endabschnitte der zwei Kontaktteile der Kontaktvorrichtung zusammenpassen, wenn die Kontaktteile mit entgegengesetzten Seiten zueinander aneinandergelegt werden. Die Kontaktdruckfeder kann in diesem Fall zweckmäßig eine Drahtfeder sein, die in der Symmetrieebene der Kontaktvorrichtung zwischen den vier Armen der beiden Kontaktteile angeordnet ist und die sich zwischen den Endabschnitten der Kontaktvorrichtung erstreckt und sich an den Grundteilen der Kontaktbügel abstützt.

Es können mehrere Kontaktvorrichtungen der beschriebenen Ausführungsformen parallel angeordnet werden, um eine Anpassung an verschiedene Nennströme zu erreichen.

**Patentansprüche**

1. Steckkontaktvorrichtung zur Herstellung einer elektrischen Verbindung zwischen zwei Schienen (4, 5), von denen jede zwei einander gegenüberliegende parallele Kontaktflächen (42, 43 beziehungsweise 52, 53) hat, wobei die Kontaktvorrichtung von einer Schiene (4) getragen wird und in ihrer Längsrichtung relativ zu der anderen Schiene (5) verschiebbar ist, mit zwei im wesentlichen gleichen, zusammenwirkenden länglichen Kontaktteile (1, 2), die zwei elektrisch parallelgeschaltete Strompfade ($l_1$, $l_2$) zwischen den beiden Schienen bilden, aus einem im wesentlichen geraden Mittelteil (11, 21) und zwei aus dem Mittelteil in dieselbe Richtung herausragenden Endabschnitt bestehen, wobei die verhältnismäßig langen Mittelteile (11) der Kontaktteile im wesentlichen parallel zueinander und zu den Kontaktflächen der Schienen (4, 5) verlaufen, die Kontaktteile in senkrechter Richtung zu den genannten Kontaktflächen zueinander beweglich sind und in dieser Richtung unter der Wirkung mindestens einer kontaktdruckerzeugendn Feder (3) stehen, dadurch gekennzeichnet, daß der eine Endabschnitt jedes Kontaktteils (zum Beispiel 1) eine in der Mitte der schmalen Seite des Mittelteils (11) des Kontaktteils liegende Mittelkontaktzunge (12) bildet, daß der andere Endabschnitt desselben Kontaktteils zwei an oder nahe je einer Seite der schmalen Seite des Mittelteils (11) des Kontaktteils liegende Seitenkontaktzungen (13, 14) bildet, deren Abstand voneinander größer ist als die Dicke der Mittelkontaktzunge (12), und daß die beiden Kontaktteile (1, 2) der Kontaktvorrichtung mit entgegengesetzten Seiten derart zueinander liegen, daß die Mittelkontaktzunge (12 beziehungsweise 22) jedes Kontaktteils zwischen den Seitenkontaktzungen (23, 24 beziehungsweise 13, 14) des jeweils anderen Kontaktteils liegt.

2. Steckkontaktvorrichtung zur Herstellung einer elektrischen Verbindung zwischen zwei Schienen (4, 5), von denen jede zwei einander gegenüberliegende parallele Kontaktflächen (42, 43 beziehungsweise 52, 53) hat, wobei die Kontaktvorrichtung von einer Schiene (4) getragen wird und in ihrer Längsrichtung relativ zu der anderen Schiene (5) verschiebbar ist, mit zwei im wesentlichen gleichen, zusammenwirkenden länglichen Kontaktteile (1, 2), die zwei elektrisch parallelgeschaltete Strompfade ($I_1$, $I_2$) zwischen den beiden Schienen bilden, aus einem im wesentlichen geraden Mittelteil (11, 21) und zwei aus dem Mittelteil in dieselbe Richtung herausragenden Endabschnitt bestehen, wobei die verhältnismäßig langen Mittelteile (11) der Kontaktteile im wesentlichen parallel zueinander und zu den Kontaktflächen der Schienen (4, 5) verlaufen, die Kontaktteile in senkrechter Richtung zu den genannten Kontaktflächen zueinander beweglich sind und in dieser Richtung unter der Wirkung mindestens einer kontaktdruckerzeugenden Feder (3) stehen, dadurch gekennzeichnet, daß die Kontaktteile (7, 8) durch Stanzen und Biegen von Blech hergestellt sind und aus einem ebenen rechteckigen Grundteil (71, 81) mit einer rechtwinklig zum Grundteil hochgebogenen in Längsrichtung verlaufenden Versteifungskante (72, 82) und aus je zwei Kontaktzungen (73, 74 beziehungsweise 83, 84) bestehen, die an den Enden des Kontaktteils von der Versteifungskante abgebogen sind.

3. Kontaktvorrichtung nach Anspruch 1, dadurch gekennzeichnet, daß die Feder (3) eine im wesentlichen U-förmig gebogene Blattfeder ist, welche die Kontaktteile (1, 2) umgreift, wobei die Schenkel der Feder mit Federarmen (31, 32) versehen sind, die sich in entgegengesetzten Richtungen in Längsrichtung der Kontaktteile erstrecken.

4. Kontaktvorrichtung nach einem der Ansprüche 1 oder 3, dadurch gekennzeichnet, daß die Kontaktzungen an dem einen Ende der Kontaktvorrichtung mit Quernuten (15, 25) versehen sind, die einem Loch (46) in einer Kontaktschiene (45) angepaßt sind, in welches die Kontaktvorrichtung einrastbar und festsetzbar ist.

5. Kontaktvorrichtung nach einem der Ansprüche 1, 3 oder 4, dadurch gekennzeichnet, daß die Kontaktzungen an dem einen Ende der Kontaktvorrichtung ein durchgehendes Loch (61) zur Befestigung eines Kontaktschiebers (62) haben.

6. Kontaktvorrichtung nach Anspruch 2, dadurch gekennzeichnet, daß sie zwei gebogene Blattfedern (35, 36) enthält, von denen jede auf einer Seite der Kontaktvorrichtung angeordnet ist und die sich mit ihrem Mittelteil an dem Grundteil des einen Kontaktteils und mit ihren Enden an der Rückseite der Kontaktzungen des jeweils anderen Kontaktteils abstützen.

7. Kontaktvorrichtung nach Anspruch 1, dadurch gekennzeichnet, daß die Kontaktteile durch Stanzen und Biegen von Blech hergestellt sind und aus einem ebenen rechteckigen Grundteil und senkrecht zur Ebene des Mittelteils hochgebogenen Kontaktzungen bestehen, wobei die Mittelkontaktzunge, die den einen Endabschnitt des Kontaktteils bildet, von zwei aneinandergepreßten Blechstreifen gebildet ist.

8. Kontaktvorrichtung nach Anspruch 1, dadurch gekennzeichnet, daß die Kontaktteile durch Stanzen und Biegen von Blech hergestellt sind und ein Mittelteil aufweisen, das aus zwei langgestreckten in Abstand voneinander und in verschiedenen Ebenen nebeneinander angeordneten Armen besteht, und daß die Endabschnitte des Kontaktteils aus im wesentlichen U-förmigen Kontaktbügeln bestehen, welche die Enden der Arme verbinden, wobei der Abstand zwischen den Außenflächen der Schenkel der Kontaktbügel des einen Endabschnittes kleiner ist als der Abstand zwischen den Innenflächen der Schenkel der Kontaktbügel des anderen Endabschnittes.

## Claims

1. Plug-in contact device for establishing an electrical connection between two bars (4, 5) each of which having two confronting parallel contact surfaces (42, 43 and 52, 53 respectively) said contact device being supported by one bar (4) and displaceable in its longitudinal direction relative to the other bar (5), with two substantially identical coacting elongated contact members (1, 2) which form two electrically parallel-connected current paths ($I_1$, $I_2$) between the two bars which contact members consists of a substantially straight middle portion (11, 21) and two end portions projecting from the middle portion in the same direction, said contact members being arranged with their relatively long middle portions (11) substantially parallel to each other and to the contact surfaces of the bars (4, 5) and being movable relative to each other perpendicular to said contact surfaces and being subjected in this direction to the influence of at least one contact pressure generating spring (3), characterized in that one end portion of each contact member (for example 1) forms a middle contact stud (12) positioned in the center of the edge of the middle portion (11) of the contact member, that the other end portion of the same contact member forms two lateral contact studs (13, 14) positioned at or near one side each of the edge of the middle portion (11) of the contact member, the distance between these two lateral contact studs being larger than the thickness of the middle contact stud (12), and that the two contact members (1, 2) of the contact device are positioned, with opposite sides, in such a manner relative to each other, that the middle contact stud (12 and 22 respectively) of each contact member enters between the lateral contact studs (23, 24 and 13, 14 respectively) of the corresponding other contact member.

2. Plug-in contact device for establishing an electrical connection between two bars (4, 5) each of which having two confronting parallel contact surfaces (42, 43 and 52, 53 respectively) said contact device being supported by one bar (4) and displaceable in its longitudinal direction relative to the other bar (5), with two substantially identical coacting elongated contact members (1, 2) which form two electrically parallel-connected current paths ($I_1$, $I_2$) between the two bars which contact members consists of a substantially straight middle portion (11, 21) and two end portions projecting from the middle portion in the same direction, said contact members being arranged with their relatively long middle portions (11) substantially parallel to each other and to the contact surfaces of the bars (4, 5) and being movable relative to each other perpendicular to said contact surfaces and being subjected in this direction to the influence of at least one contact pressure generating spring (3), characterized in that the contact members (7, 8) are manufactured from sheet metal by means of punching and bending and consist of a plane rectangular base portion (71, 81) with a stiffening edge (72, 82) being bent upwards at right angle relative to said base portion and extending in the longitudinal direction, and of two contact studs each (73, 74 and 83, 84 respectively) bent in from the stiffening edge at the ends of the contact portion.

3. Contact device according to Claim 1, characterized in that the spring (3) is a leave spring which is bent into substantially U-shape and surrounds the contact members (1, 2), the legs of the spring being provided with spring arms (31, 32) extending in opposite directions in the longitudinal direction of the contact members.

4. Contact device according to any of Claims 1 or 3, characterized in that the contact studs are provided with transversal slots (15, 25) at one end of the contact device which slots are adapted to a hole (46) in a contact bar (45) into which the contact device is adapted to be snapped and retained.

5. Contact device according to any of Claims 1, 3 or 4, characterized in that the contact studs are provided with a through-hole (61) at one end of the contact device for attachment of a contact carrier (62).

6. Contact device according to Claim 2, characterized by comprising two bent leave springs (35, 36) each of which is arranged on one side of the contact device and leans with its middle portion against the base portion of one of the contact members and with its ends on the rear side of the contact studs of the respective other contact member.

7. Contact device according to Claim 1, characterized in that the contact members are manufactured by punching and bending of sheet metal and consist of a plane rectangular base portion and of contact studs bent up perpendicular to the plane of the middle portion, the middle contact stud, which constitutes one end portion of the contact stud, being formed by two sheet metal lugs pressed against each other.

8. Contact device according to Claim 1, characterized in that the contact members are manufactured by punching and bending of sheet metal and comprise a middle portion consisting of two elongated arms positioned adjacent to each other in spaced relationship and in different planes, and that the end portions of the contact members consist of substantially U-shaped contact yokes connecting the ends of the arms, with the distance between the outer surfaces of the legs of the contact yokes of the one end portion being smaller than the distance between the inner surfaces of the legs of the contact yokes of the other end portion.

## Revendications

1. Connecteur à enfichage pour établir une liaison électrique entre deux barres omnibus (4, 5), dont chacune possède deux surfaces de contact parallèles, situées l'une en face de l'autre (42, 43, respectivement 52, 53), du type dans lequel le connecteur est porté par l'une (4) des barres omnibus et est déplaçable dans le sens de sa longueur par rapport à l'autre barre omnibus (5), avec deux éléments de contact (1, 2), sensiblement identiques, de forme allongée et coopérant entre eux, et qui forment deux pistes conductrices ($I_1$, $I_2$) montées électriquement en parallèle entre les deux barres omnibus, en étant constituées par un élément médian (11, 21) sensiblement rectiligne et par deux sections d'extrémité débordant dans la même direction l'élément médian, l'agencement étant tel que les éléments médians (11), relativement longs, des éléments de contact s'étendent sensiblement parallèlement entre eux et par rapport aux surfaces de contact des barres omnibus (4, 5), alors que les éléments de contact sont mobiles entre eux dans le sens perpendiculaire auxdites surfaces de contact et sont soumis dans ce sens à l'action d'au moins un ressort (3) qui produit une pression de contact, caractérisé par le fait que chaque élément de contact (par exemple 1) forme une languette de contact médiane (12) située au milieu du côté étroit de l'élément médian (11), que l'autre section d'extrémité du même élément de contact forme deux languettes de contact latérales (13, 14) situées sur ou près de chaque côté étroit de l'élément médian (11) et la distance entre elles est supérieure à l'épaisseur de la languette de contact médiane (12) et que les deux éléments de contact (1, 2) du connecteur se situent entre eux, avec leurs côtés opposés de telle manière que la languette de contact médiane (12 ou 22) de chaque élément de contact se situe entre les languettes de contact laréales (23, 24 ou 13, 14) de l'autre élément de contact.

2. Connecteur à enfichage pour établir une liaison électrique entre deux barres omnibus (4, 5), dont chacune possède deux surfaces de contact parallèles, situées l'une en face de l'autre (42, 43, respectivement 52, 53), du type dans lequel le connecteur est porté par l'une (4) des barres omnibus et est déplaçable dans le sens de sa longueur par rapport à l'autre barre omnibus (5), avec deux éléments de contact (1, 2), sensiblement identiques, de forme allongée et coopérant entre eux, et qui forment deux pistes conductrices ($l_1$, $l_2$) montées électriquement en parallèle entre les deux barres omnibus, en étant constituées par un élément médian (11, 21) sensiblement rectiligne et par deux sections d'extrémité débordant dans la même direction l'élément médian, l'agencement étant tel que les éléments médians (11), relativement longs, des éléments de contact s'étendent sensiblement parallèlement entre eux et par rapport aux surfaces de contact des barres omnibus (4, 5), alors que les éléments de contact sont mobiles entre eux dans le sens perpendiculaire auxdites surfaces de contact et sont soumis dans ce sens à l'action d'au moins un ressort (3) qui produit une pression de contact, caractérisé par le fait que les éléments de contact (7, 8) sont réalisés par estampage et pliage d'une tôle et sont constitués par un élément de fond plat et rectangulaire (71, 81) avec un bord de renforcement (72, 82) replié à angle droit vers le haut à partir de l'élément de fond et s'étendant dans le sens longitudinal, ainsi que par respectivement deux languettes de contact (73, 74 et 83, 84) qui sont repliées à partir du bord de renforcement, aux extrémités de l'élément de contact.

3. Connecteur selon la revendication 1, caractérisé par le fait que le ressort (3) est une lame de ressort pliée sensiblement selon une forme en U et entourant les éléments de contact, les branches du ressort étant pourvues de bras élastiques (31, 32) qui s'étendent dans des sens opposés, selon la direction longitudinale des éléments de contact.

4. Connecteur selon l'une des revendications 1 ou 3, caractérisé par le fait qu'à l'une de ses extrémités sont prévues des gorges transversales (15, 25) qui sont adaptées à un trou (46) ménagé dans une barre omnibus (45) et dans lequel le connecteur est susceptible d'être enclenché et fixé.

5. Connecteur selon l'une des revendications 1, 3 ou 4, caractérisé par le fait que les languettes de contact possèdent à l'une desdites extrémités du connecteur un trou traversant (61) pour la fixation d'une barre omnibus (62).

6. Connecteur selon la revendication 2, caractérisé par le fait qu'il comporte deux lames de ressort repliées (35, 36) dont chacune est disposée sur un côté du connecteur, lesdites lames de ressort prenant appui par leurs parties médianes contre l'élément de fond de l'élément de contact, et par leurs extrémités contre le côté dorsal des languettes de contact de l'autre élément de contact.

7. Connecteur selon la revendication 1, caractérisé par le fait que les éléments de contact sont réalisés par estampage et pliage d'une tôle et sont constitués par un élément de fond et par des languettes de contact pliées verticalement vers le haut par rapport au plan de l'élément médian, la languette de contact médiane qui forme ladite section d'extrémité de l'élément de contact étant constituée par deux bandes de tôle pressées l'une contre l'autre.

8. Connecteur selon la revendication 1, caractérisé par le fait que les éléments de contact sont réalisés par estampage et pliage d'une tôle et comportent une partie médiane qui est constituée par deux bras allongés disposés à distance entre eux et situés côte à côte dans des plans différents, et que les sections d'extrémité de l'élément de contact sont formées par des étriers ayant sensiblement la forme d'un U et reliant les extrémités des bras, la distance entre les surfaces intérieures des branches des étriers de contact d'une section d'extrémité étant inférieure à la distance entre les surfaces intérieures des branches des étriers de contact de l'autre section d'extrémité.

FIG.1b

FIG.1a

FIG.1c

FIG.2a

FIG.2b

FIG.3

FIG.4

FIG.5

0 086 316

FIG. 6a

FIG. 6b

FIG. 7a

FIG. 7b

FIG. 7c

FIG. 8

FIG. 9

2